# FASCICULE DE BREVET EUROPEEN

(11) **EP 2 909 447 B1**
(45) Date de publication et mention de la délivrance du brevet: **07.12.2016**
(21) Numéro de dépôt: 13785532.6
(22) Date de dépôt: 08.10.2013
(51) Int. Cl.: F01D 7/00, B64C 11/30, F04D 29/36, F04D 29/66, F02K 3/072

(54) **DISPOSITIF ET PROCÉDÉ DE COMMANDE DU CALAGE DES PALES**
VORRICHTUNG UND VERFAHREN ZUR STEUERUNG DER NEIGUNG VON SCHAUFELN
DEVICE AND METHOD FOR CONTROLLING THE PITCH OF BLADES

(30) Priorité: 18.10.2012 FR 1259952
(43) Date de publication de la demande: 26.08.2015
(73) Titulaire: SNECMA, 75015 Paris (FR)
(72) Inventeur: FABRE, Adrien, F-77550 Moissy-Cramayel Cedex (FR); LARTIGUE, Norbert, F-77550 Moissy-Cramayel Cedex (FR)
(74) Mandataire: Regimbeau
(86) Numéro de dépôt international: PCT/FR2013/052402
(87) Numéro de publication internationale: WO 2014/060681

(56) Documents cités:
- WO-A1-2010/136684
- WO-A1-2012/131271
- WO-A2-2010/086338
- FR-A1- 2 765 550
- FR-A1- 2 942 644

## Description

### Domaine de l'invention

L'invention concerne un dispositif de commande du calage des pales d'un rotor de soufflante, ainsi qu'une soufflante comprenant un tel dispositif.

L'invention concerne également un procédé de commande du calage des pales d'un rotor de soufflante mettant en oeuvre ce dispositif.

### Présentation de l'Art Antérieur

Les soufflantes de turbomachine comprenant au moins un rotor et des pales à calage variable sont connues de l'état de la technique, voir par exemple le document WO 2010/136684 A1.

Le calage géométrique est l'angle formé par la corde du profil de la pale et l'axe de rotation du moteur.

A cet effet, on connaît un dispositif comprenant un arbre radial lié à la pale par un pivot, une biellette dont le déplacement axial commande la rotation de l'arbre radial, et une pièce axisymétrique à laquelle sont rattachées l'ensemble des biellettes.

Un vérin commande le déplacement axial de la pièce axisymétrique, ce qui entraîne un déplacement axial des biellettes, et permet de régler de manière uniforme le calage de l'ensemble des pales.

Or, les pales rencontrent un flux aérodynamique inhomogène, en raison de divers facteurs, qui incluent notamment les effets d'incidence de l'aéronef, comme par exemple au décollage, et les effets de sillage dus à la présence du moteur, des ailes, du fuselage, ou d'autres éléments comme le pylône reliant le moteur à l'aéronef.

Cette inhomogénéité induit des charges sur les pales, et plus généralement, sur le dispositif de commande du calage.

En outre, les pales sont soumises aux déformations résultant des effets gyroscopiques liés aux manoeuvres de l'aéronef.

Les charges et déformations précitées peuvent conduire à des usures mécaniques prématurées de pièces de la soufflante, comme les pales ou le dispositif de commande du calage.

Dans le cas de soufflantes comprenant un rotor d'hélice amont et un rotor d'hélice aval, un couplage indésirable peut exister entre les pales du rotor amont et les pales du rotor aval.

Ce couplage est à la fois mécanique, c'est-à-dire que les vibrations mécaniques indésirables peuvent être amplifiées, et sonore, ce qui induit une amplification des vibrations sonores.

### Présentation de l'invention

Afin de pallier les inconvénients de l'état de la technique, l'invention propose un dispositif de commande du calage des pales d'un rotor de soufflante, comprenant un arbre radial lié à la pale par un pivot, une biellette dont le déplacement axial commande la rotation de l'arbre radial, caractérisé en ce qu'il comprend une première pièce mobile en rotation avec le rotor autour de l'axe de la soufflante, et sur laquelle est fixée une extrémité de chaque biellette, une seconde pièce liée à la première pièce, et au moins trois vérins aptes à mouvoir ladite seconde pièce en translation axiale, ainsi qu'à faire varier son inclinaison, la translation et l'inclinaison de la seconde pièce entraînant une translation et une inclinaison correspondantes de la première pièce, de sorte que, lors d'une rotation de la première pièce, chaque biellette subit un déplacement axial dont l'amplitude est variable et fonction de l'inclinaison de la première pièce, permettant de faire varier le calage de la pale au cours de son tour de rotation.

L'invention concerne une soufflante d'une turbomachine comprenant au moins un rotor et des pales à calage variable, caractérisé en qu'elle comprend ledit dispositif de commande du calage de ses pales.

Enfin, l'invention concerne également un procédé de contrôle du calage des pales d'un rotor de soufflante, mettant en oeuvre ledit dispositif de commande, caractérisé en ce qu'il comprend l'étape consistant à commander les vérins pour modifier l'inclinaison de la première pièce, de sorte que, lors d'une rotation de la première pièce, chaque biellette subit un déplacement axial dont l'amplitude est variable et fonction de l'inclinaison de la première pièce, le calage de la pale variant au cours de son tour de rotation autour de l'axe de la soufflante.

L'invention permet de faire varier le calage de chaque pale au cours de sa rotation. En particulier, le calage de la pale varie en fonction de sa position sur le tour.

Ainsi, grâce à un réglage adapté de la commande du calage, le dispositif et la soufflante ne subissent pas les perturbations du flux aérodynamique dues à certains obstacles (ailes, fuselage, etc.).

La soufflante présente par conséquent une robustesse et une durée de vie accrues.

En outre, le couplage entre les pales du rotor amont et du rotor aval est réduit, ce qui permet de réduire les amplifications mécaniques et sonores indésirables.

Enfin, en cas de défaillance, le dispositif présente un mode de fonctionnement dégradé, qui évite de devoir procéder à un arrêt immédiat du moteur.

### Présentation des figures

D'autres caractéristiques et avantages de l'invention ressortiront encore de la description qui suit, laquelle est purement illustrative et non limitative, et doit être lue en regard des dessins annexés sur lesquels :
- la Figure 1 représente un mode de réalisation d'un dispositif de commande du calage des pales d'un rotor de soufflante ;
- la Figure 2 représente une vue de face d'une partie du dispositif et d'éléments de liaison ;
- les Figure 3 et 4 représentent une vue tridimensionnelle d'une partie du dispositif ;
- les Figure 5 et 6 représentent une vue tridimensionnelle d'une partie du dispositif, lorsque l'une des pièces est inclinée par l'intermédiaire de vérins ;

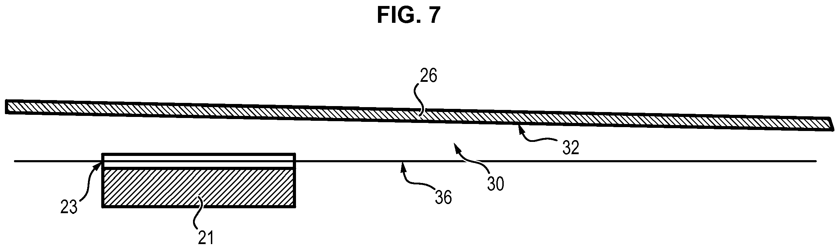

- la Figure 7 représente un mode de réalisation du guidage du dispositif par rapport à une pièce inclinée du rotor ;

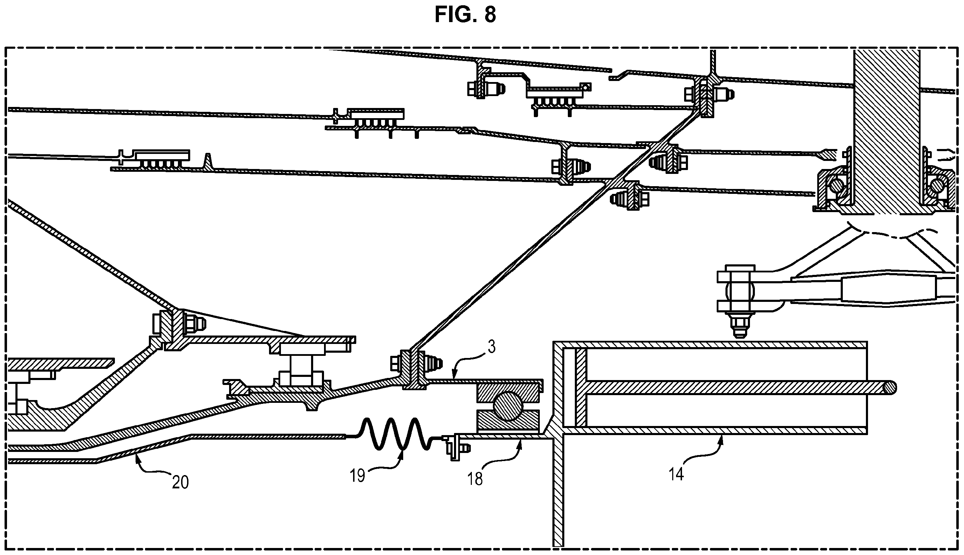

- la Figure 8 représente des pièces de fixation du dispositif dans une soufflante ;
- la Figure 9 représente un mode de réalisation d'un procédé de contrôle du calage des pales ;
- les Figures 10 et 11 représentent des commandes assurant la variation du calage des pales au cours de leur tour de rotation.

### Description détaillée

### Dispositif de commande du calage des pales

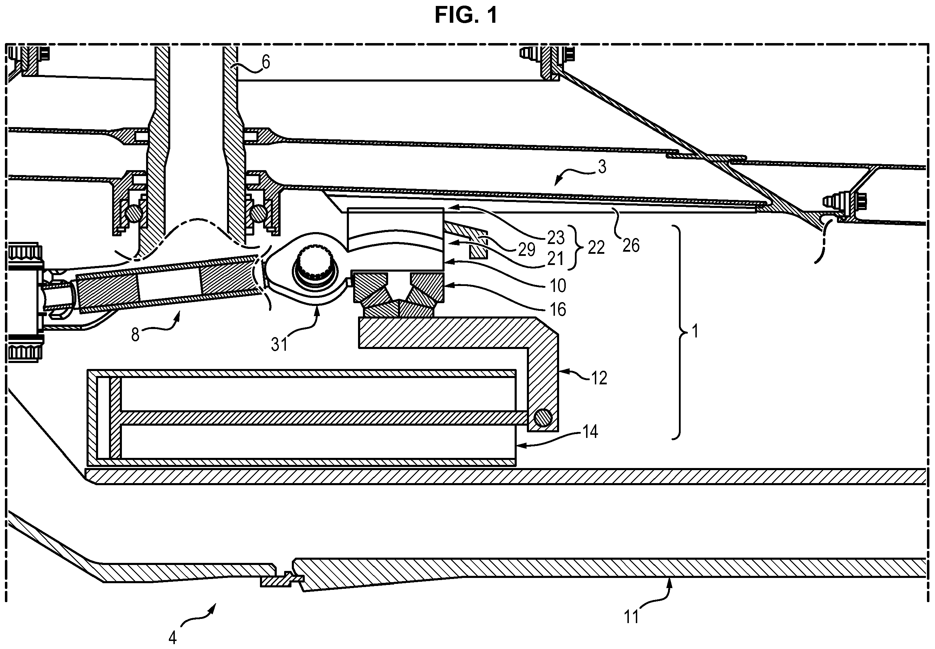

Un mode de réalisation d'un dispositif 1 de commande du calage des pales d'un rotor 3 de soufflante 4 est représenté en Figures 1 à 6.

Le dispositif 1 comprend un arbre 6 radial lié à la pale (non représentée). De manière classique, le pied de la pale est monté sur l'arbre 6 radial par l'intermédiaire d'un pivot. L'arbre 6 radial est apte à se mouvoir en rotation autour de son axe.

Le dispositif 1 comprend en outre, pour chaque pale, une biellette 8 dont le déplacement axial commande la rotation de l'arbre radial 6 autour de son axe. A cet effet, une portion de la biellette 8 est liée à l'arbre 6 radial, par exemple par une liaison pivot.

Le dispositif 1 comprend en outre une première pièce 10. Cette pièce première pièce 10 est solidaire d'un rotor 3 de la soufflante 4.

Ainsi, la première pièce 10 est mobile en rotation avec le rotor 3 autour de l'axe 11 de la soufflante 4.

L'autre extrémité 31 de la biellette 8 est fixée sur la première pièce 10.

Le dispositif 1 comprend également une seconde pièce 12 liée à la première pièce 10, dont le rôle est décrit ci-après.

La première et la deuxième pièce 10, 12 sont typiquement des pièces axisymétriques. Par exemple, la première pièce 10 est annulaire, et la deuxième pièce 12 est un disque.

Le dispositif 1 comprend au moins trois vérins 14 aptes à mouvoir ladite seconde pièce 12 en translation axiale, selon l'axe 11 de la soufflante 4, ainsi qu'à faire varier son inclinaison. La seconde pièce 12 présente donc au moins trois degrés de liberté, commandés par les vérins 14. Ces vérins 14 sont par exemple des vérins hydrauliques classiques.

En l'absence d'une commande des vérins 14, la seconde pièce 12 est en général disposée dans un plan radial (plan vertical), les vérins 14 permettant d'incliner la seconde pièce 12 par rapport à cette position nominale.

Selon une configuration, ces vérins 14 sont disposés à 120° les uns par rapport aux autres. En général, les vérins 14 sont disposés dans un même plan.

La première pièce 10 et la seconde pièce 12 étant liées mécaniquement, la translation axiale et l'inclinaison de la seconde pièce 12 entraînent une translation axiale et une inclinaison correspondantes de la première pièce 10.

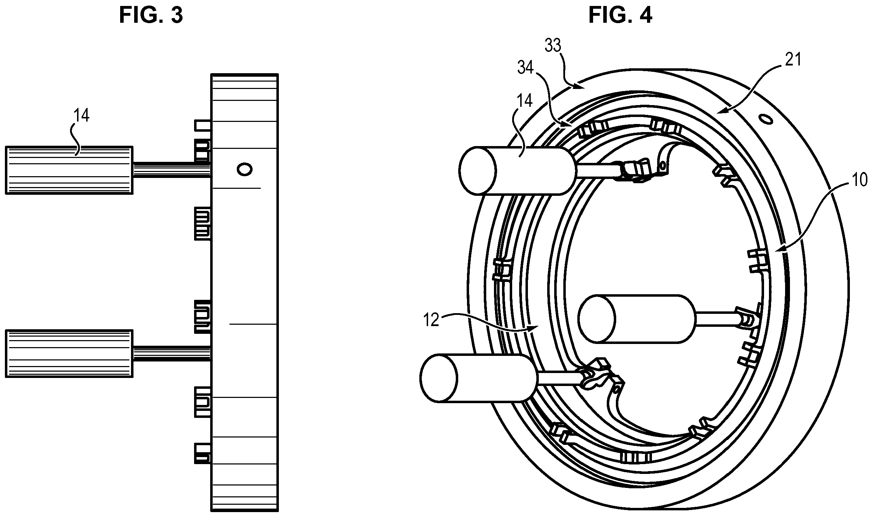

Par exemple, en Figures 3 et 4, les trois vérins présentent une extension identique. La première pièce 10 et la seconde pièce 12 sont situées dans un plan radial.

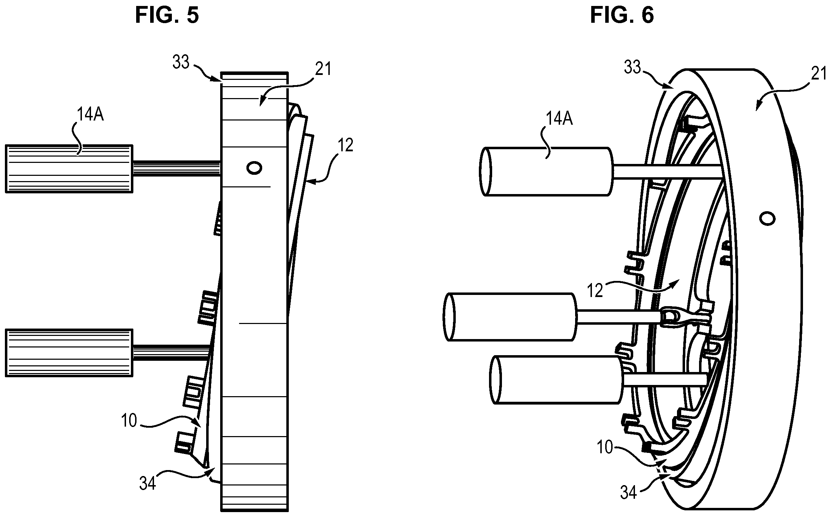

En Figures 5 et 6, l'un des vérins (vérin 14_{A}) reçoit une commande d'extension (par exemple le vérin passe d'une extension de 150 mm à une extension de 200 mm), tandis que les autres vérins conservent leur extension d'origine.

Par conséquent, la seconde pièce 12, et donc la première pièce 10 sont déplacées vers un plan incliné par rapport au plan radial.

L'inclinaison de la seconde pièce 12 permet d'incliner la première pièce 10 par rapport à un plan radial. Par conséquent, après inclinaison de la première pièce 10, celle-ci présente un mouvement de rotation dans un plan incliné par rapport à un plan radial.

En raison de cette inclinaison, lors d'une rotation de la première pièce 10, chaque biellette 8 subit un déplacement axial dont l'amplitude est variable. Ceci résulte du fait que l'extrémité 31 de la biellette 8 est liée à la première pièce 10, elle-même en rotation dans un plan incliné par rapport à un plan radial. Sur un tour de rotation, chaque biellette 8 présente donc un déplacement axial qui varie sur le tour.

L'amplitude du déplacement axial de la biellette 8 est fonction de l'inclinaison de la première pièce 10. Plus la première pièce 10 est inclinée, plus cette amplitude est variable sur un tour.

Grâce à cette configuration, le dispositif 1 permet de faire varier le calage de la pale au cours de son tour de rotation.

En particulier, le calage de chaque pale dépend de sa position sur le tour de rotation. A un instant donné, les différentes pales du rotor présentent donc un calage qui n'est pas identique et qui dépend de leur position sur le tour de rotation.

La translation de la première pièce 10 permet de régler le calage de l'ensemble des pales, puisque cette translation induit une translation commune des biellettes 8, et donc une rotation des arbres radiaux 6.

L'inclinaison de la première pièce 10 permet quant à elle de produire une commande de calage cyclique des pales sur le tour de rotation. Pour une inclinaison donnée de la première pièce 10, le calage d'une pale donné varie périodiquement, en fonction du déplacement axial de la biellette 8.

Selon un exemple de réalisation, la seconde pièce 12 est liée à la première pièce 10 par un roulement 16 mécanique.

En effet, la seconde pièce 12 est liée au carter (partie fixe) de la soufflante, tandis que la première pièce 10 est liée au rotor 3 de la soufflante.

Il s'agit par exemple d'un roulement à billes.

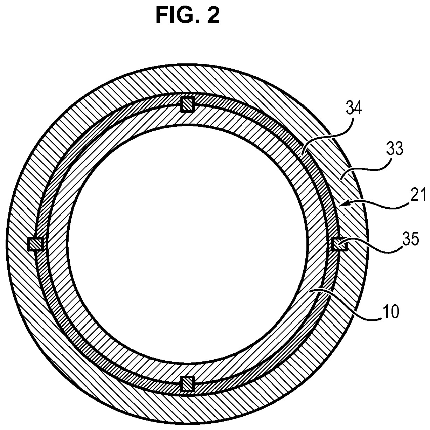

Afin de lier la première pièce 10 au rotor 3, le dispositif 1 comprend des éléments 22 de liaison, dont un mode de réalisation est représenté en Figures 1 et 2.

Les éléments 22 de liaison comprennent un cardan 21, permettant de lier la première pièce 10 au rotor 3 en rotation autour de l'axe 11 de la soufflante. Ce cardan 21 est schématiquement représenté en Figure 2, sous la forme de deux pièces 33, 34 annulaires liées par des pions 35, et entourant la première pièce 10.

En outre, afin de permettre le guidage axial de la première pièce 10 par rapport au rotor 3, les éléments 22 de liaison comprennent des clavettes ou cannelures 23. Ces clavettes 23 permettant un guidage axial de la première pièce 10 par rapport au rotor 3.

Dans un mode de réalisation, les clavettes 23 participent au guidage axial par rapport à des viroles 26 inclinées. Il s'agit par exemple de la paroi de l'enceinte comprenant l'huile de la soufflante, dont la pente est nécessaire au drainage.

Les surfaces de sommet et de fond des clavettes 23 sont parallèles à l'axe moteur.

La virole 26 présente quant à elle des gorges 30 complémentaires des clavettes 23. Ces gorges 30 complémentaires présentent une surface 32 de fond de gorge inclinée (inclinaison par rapport à l'axe 11 de la soufflante 4), ce qui permet d'assurer la fonction de drainage de l'huile (qui est la fonction originelle de la pièce 26).

La surface 36 du sommet des gorges 30 complémentaires des clavettes 23 est horizontale, tandis que l'autre surface 32 est inclinée, pour la coopération avec la pièce 26 inclinée.

Selon un exemple de réalisation, les clavettes 23 sont disposées sur une surface externe du cardan 21.

Dans certains cas, comme dans le cas de rotors disposés en aval de certaines soufflantes, il se pose le problème de la fixation du dispositif 1, et en particulier, des vérins 14.

En effet, dans le cas de ces rotors en aval, aucune liaison avec la structure de la soufflante n'est possible, car les pièces présentes à ce niveau ne peuvent supporter les efforts qu'imposerait une telle liaison. Il s'agit par exemple du fourreau 20 de la soufflante, comprenant les canalisations hydrauliques et les alimentations électriques de certains capteurs, ledit fourreau 20 n'étant pas apte à supporter les efforts imposés par le dispositif 1.

Un repère fixe doit donc être recréé.

A cet effet, selon un exemple de réalisation, le dispositif 1 comprend un roulement 18 de liaison liant les vérins 14 à une structure du rotor 3. Les efforts axiaux et radiaux imposés par le dispositif 1 sont repris par ce roulement 18.

En outre, selon un exemple, le dispositif 1 comprend en outre un amortisseur 19 élastique liant les vérins 14 à un fourreau 20 de la soufflante 4. Cet amortisseur 19 permet d'atténuer les déformations axiales dues aux effets thermiques, et est avantageusement disposé entre le fourreau 20 et la structure du rotor 3 sur laquelle est fixée le roulement 18. Cet amortisseur 19, par exemple un soufflet métallique, permet notamment d'éviter de solliciter axialement le fourreau 20, et d'éviter l'hyper-statisme de la configuration.

Ainsi, le fourreau 20 n'a pas à subir de charges structurelles de la part du dispositif 1.

Dans le dispositif 1, au moins trois vérins 14 sont mis en place. Ces vérins 14 sont en général des vérins classiques, plus simples à mettre en oeuvre que des vérins annulaires de l'art antérieur.

Afin de ne pas augmenter le taux de défaillance du dispositif, des butées 29 sont prévues dans un mode de réalisation afin de limiter l'inclinaison de la première et/ou de la deuxième pièce 10, 12. Les butées 29 peuvent par exemple être mises en place sur le cardan 21. Alternativement, les butées 29 peuvent être mises en place sur la seconde pièce 12.

En limitant l'inclinaison à une valeur seuil, par exemple plus ou moins 5°, on limite l'amplitude de variation du calage des pales, par exemple à plus ou moins 2° (ces valeurs sont purement illustratives et non limitatives).

Ainsi, en cas de défaillance d'un des trois vérins 14, on retrouve un mode de fonctionnement dégradé, mais qui ne nécessite pas l'arrêt moteur, étant donné que l'amplitude de variation du calage est limitée.

La commande des vérins 14 est réalisée par une unité de commande, qui peut par exemple être intégrée dans le calculateur de l'aéronef. L'unité de commande peut être programmée pour mettre en oeuvre les modes de réalisation du procédé de commande du calage décrits ci-après.

Le dispositif 1 peut notamment être utilisé dans une soufflante 4 de type non carénée, comprenant deux hélices contrarotatives. Dans ce cas, un premier dispositif est utilisé pour le calage des pales du rotor de l'hélice amont, et un deuxième dispositif est utilisé pour le calage des pales du rotor de l'hélice aval.

### Procédé de contrôle

Dans un mode de réalisation, un procédé de contrôle du calage des pales comprend l'étape E1 consistant à commander les vérins 14 pour modifier l'inclinaison de la première pièce 10.

Lors d'une rotation de la première pièce 10, chaque biellette 8 subit un déplacement axial dont l'amplitude est variable et fonction de l'inclinaison de la première pièce 10.

Par conséquent, lors d'un tour de rotation de la pale autour de l'axe 11 de la soufflante 4, le calage de la pale varie.

La commande imposée par les vérins 14 permet de sélectionner l'inclinaison de la première pièce 10, via l'inclinaison de la deuxième pièce 12.

Cette commande peut varier en cours de vol, par exemple selon les conditions de vol, ou selon l'état de l'aéronef.

La commande en translation imposée par les vérins 14 à la deuxième pièce 12 permet en outre d'imposer une modification commune au calage de toutes les pales du rotor 3.

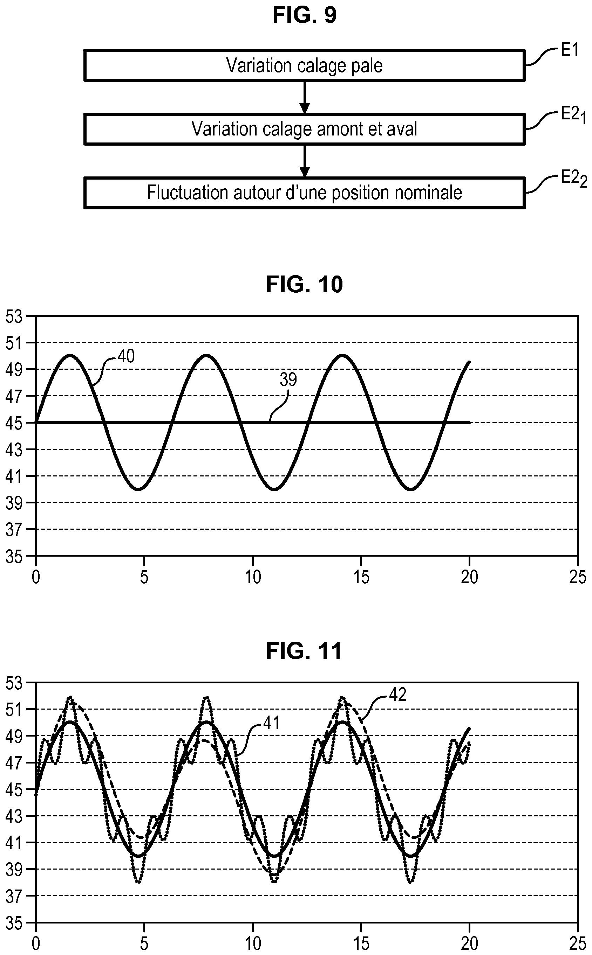

En Figure 10, un exemple schématique de commande est illustré. Une commande en translation par les vérins 14 imposée à la deuxième pièce 12 permet d'imposer un calage de 45° à l'ensemble des pales (courbe 39).

L'inclinaison de la seconde pièce 12, entraîne une inclinaison de la première pièce 10, ce qui induit une variation de type sinusoïdale du calage de chaque pale qui est fonction de la position de la pale sur le tour de rotation (courbe 40).

L'inclinaison de la première pièce 10, qui conditionne le changement cyclique du calage des pales au cours d'un tour, est choisie pour réduire les pertes de pression et de portance dues à la présence d'un obstacle en amont de la soufflante 4, comme par exemple une aile, ou le fuselage.

Les pertes de portance causées par l'obstacle produisent une perte de portance présentant un profil fixe qui peut être connu par simulation ou par test. A partir de ces données, le calage des pales est choisi pour contrer les pertes de portances dans les zones où ces pertes se produisent.

Dans un mode de réalisation, illustré en Figure 11, on applique une commande multi-cyclique ou sous-cyclique.

Selon un exemple, le procédé comprend l'étape consistant à faire fluctuer l'inclinaison de la première pièce 10 du dispositif 1 à une fréquence supérieure à la vitesse de rotation du rotor 3 (courbe 41). En particulier, il peut s'agir d'une commande dite multi-cyclique, c'est-à-dire dont la fréquence de variation est un multiple de la fréquence de rotation du rotor.

Selon un exemple, le procédé comprend l'étape consistant à faire fluctuer l'inclinaison de la première pièce 10 du dispositif 1 à une fréquence inférieure à la vitesse de rotation du rotor 3 (courbe 42). En particulier, il peut s'agir d'une commande dite sous-cyclique, c'est-à-dire dont la fréquence de variation est une fraction de la fréquence de rotation du rotor.

Ces commandes du calage des pales permettent notamment de réduire les amplifications sonores et/ou mécaniques indésirables.

Notamment, la symétrique aéro-acoustique de chaque hélice est cassée, et l'on peut réduire le bruit d'interaction entre des hélices amont et aval.

Dans le cas d'une soufflante 4 comprenant un rotor 3 amont et un rotor 3 aval, le procédé peut comprendre, dans un mode de réalisation, l'étape E2₁ consistant à obtenir une variation cyclique du calage des pales du rotor 3 amont de la soufflante 4 au cours du tour de rotation qui est différente de la variation cyclique du calage des pales du rotor 3 aval de la soufflante 4.

Ceci peut être réalisé en imposant une inclinaison de la première pièce 10 d'un dispositif 1 du rotor disposé en amont qui est différente de l'inclinaison de la première pièce 10 d'un autre dispositif 1 d'un rotor disposé en aval.

Par conséquent, le couplage aéro-acoustique entre les pales amont et aval est réduit, ce qui permet de réduire le bruit d'interaction entre les pales, et l'amplification des vibrations mécaniques.

Selon un exemple de réalisation, cette étape E2₁ comprend l'étape E2₂ consistant à faire fluctuer l'inclinaison de la première pièce 10 du rotor amont ou du rotor aval autour d'une position nominale.

Par exemple, la position nominale est choisie pour correspondre à l'inclinaison, et donc au calage des pales, qui permet de réduire l'influence aérodynamique d'un obstacle donné, comme cela a été décrit précédemment.

Pour réduire également le bruit d'interaction entre les pales amont et aval, une fluctuation de l'inclinaison autour de cette position nominale est en outre réalisée, cette fluctuation étant différente en amont et en aval (par exemple par la présence d'une fluctuation en amont et l'absence d'une fluctuation en aval, ou par le choix de fluctuations différentes entre l'amont et l'aval). Le couplage mécanique et acoustique des pales amont et aval est ainsi réduit, voire supprimé.

Comme on le comprend, l'invention permet de réduire les effets néfastes de l'inhomogénéité du flux aérodynamique rencontrés par les pales de soufflante, ainsi que les bruits provoqués par les pales.

## Revendications

1. Dispositif (1) de commande du calage des pales d'un rotor (3) de soufflante (4), comprenant un arbre (6) radial lié à la pale, une biellette (8) dont le déplacement axial commande la rotation de l'arbre radial (6), **caractérisé en ce qu'**il comprend:
- une première pièce (10) mobile en rotation avec le rotor (3) autour de l'axe (11) de la soufflante (4), et sur laquelle est fixée une extrémité de chaque biellette (8),
- une seconde pièce (12) liée à la première pièce (10), et
- au moins trois vérins (14) aptes à mouvoir ladite seconde pièce (12) en translation axiale, ainsi qu'à faire varier son inclinaison, la translation et l'inclinaison de la seconde pièce (12) entraînant une translation et une inclinaison correspondantes de la première pièce (10),
de sorte que, lors d'une rotation de la première pièce (10), chaque biellette (8) subit un déplacement axial dont l'amplitude est variable en fonction de l'inclinaison de la première pièce (10), permettant de faire varier le calage de la pale au cours de son tour de rotation.

2. Dispositif selon la revendication 1, dans lequel la seconde pièce (12) est liée à la première pièce (10) par un roulement (16) mécanique.

3. Dispositif selon l'une des revendications 1 ou 2, comprenant un roulement (18) de liaison, liant les vérins (14) au rotor (3).

4. Dispositif selon la revendication 3, comprenant en outre un amortisseur (19) élastique liant les vérins (14) à un fourreau (20) de la soufflante (4).

5. Dispositif selon l'une des revendications 1 à 4, dans lequel la première pièce (10) est liée au rotor (3) par des éléments (22) de liaison comprenant un cardan (21).

6. Dispositif selon la revendication 5, dans lequel les éléments (22) de liaison comprennent en outre des clavettes (23) permettant un guidage axial de la première pièce (10) par rapport au rotor (3).

7. Dispositif selon la revendication 6, comprenant des gorges (30) complémentaires des clavettes (23), dont une surface (32) est inclinée pour la coopération avec une pièce (26) inclinée du rotor.

8. Dispositif selon l'une des revendications 1 à 7, comprenant des butées (29) limitant l'inclinaison de la première et/ou de la deuxième pièce (10, 12).

9. Soufflante (4) d'une turbomachine (5) comprenant au moins un rotor (3) et des pales à calage variable, caractérisé en qu'elle comprend un dispositif de commande du calage de ses pales selon l'une des revendications 1 à 8.

10. Procédé de contrôle du calage des pales d'un rotor (3) de soufflante (4), mettant en oeuvre le dispositif (1) de commande selon l'une des revendications 1 à 8, **caractérisé en ce qu'**il comprend l'étape (E1) consistant à commander les vérins (14) pour modifier l'inclinaison de la première pièce (10),
de sorte que, lors d'une rotation de la première pièce (10), chaque biellette (8) subit un déplacement axial dont l'amplitude est variable en fonction de l'inclinaison de la première pièce (10), le calage de la pale variant au cours de son tour de rotation autour de l'axe (11) de la soufflante (4).

11. Procédé selon la revendication 10, comprenant l'étape (E2₁) consistant à imposer une inclinaison de la première pièce (10) d'un dispositif (1) d'un rotor disposé en amont d'un soufflante (4) qui est différente de l'inclinaison de la première pièce (10) d'un autre dispositif (1) d'un rotor disposé en aval de la soufflante (4).

12. Procédé selon la revendication 11, dans lequel cette étape (E2₁) comprend l'étape (E2₂) consistant à faire fluctuer l'inclinaison de la première pièce (10) du dispositif (1) du rotor amont ou du rotor aval autour d'une position nominale.

13. Procédé selon l'une des revendications 10 à 12, comprenant l'étape consistant à faire fluctuer l'inclinaison de la première pièce (10) du dispositif (1) à une fréquence supérieure ou inférieure à la vitesse de rotation du rotor (3).

## Patentansprüche

1. Steuervorrichtung (1) für die Verkleidung der Blätter eines Rotors (3) eines Gebläses (4), umfassend eine radiale Welle (6), die mit dem Blatt verbunden ist, ein Schaltgestänge (8), dessen axiale Verschiebung die Rotation der radialen Achse (6) steuert,
**dadurch gekennzeichnet, dass** sie umfasst:
- ein erstes mobiles Teil (10) in Rotation mit dem Rotor (3) um die Achse (11) des Gebläses (4) und auf der ein Ende jedes Schaltgestänges (8) befestigt ist,
- ein zweites Teil (12), das mit dem ersten Teil (10) verbunden ist, und
- wenigstens drei Zylinder (14), die geeignet sind, das genannte zweite Teil (12) in axialer Translation zu bewegen, sowie ihre Neigung abzuwandeln, wobei die Translation und die Neigung des zweiten Teils (12) eine entsprechende Translation und eine entsprechende Neigung des ersten Teils (10) nach sich ziehen,
derart, dass bei einer Rotation des ersten Teils (10) jedes Schaltgestänge (8) einer axialen Verschiebung unterzogen wird, deren Amplitude in Abhängigkeit von der Neigung des ersten Teils (10) variabel ist und die Abwandlung der Verkeilung des Blattes im Verlauf seiner Rotationsumdrehung zulässt.

2. Vorrichtung gemäß Anspruch 1, bei der das zweite Teil (12) mit dem ersten Teil (10) durch ein mechanisches Lager (16) verbunden ist.

3. Vorrichtung gemäß Anspruch 1 oder 2, umfassend ein Verbindungslager (18), das die Zylinder (14) mit dem Rotor (3) verbindet.

4. Vorrichtung gemäß Anspruch 3, umfassend darüber hinaus eine elastische Pufferung (19), die die Zylinder (14) mit einer Hülse (20) des Gebläses (4) verbindet.

5. Vorrichtung gemäß einem der Ansprüche 1 bis 4, bei der das erste Teil (10) durch eine kardanische Aufhängung (21) umfassende Verbindungselemente (22) mit dem Rotor (3) verbunden ist.

6. Vorrichtung gemäß Anspruch 5, bei der die Verbindungselemente (22) darüber hinaus Keile (23) umfassen, die eine axiale Führung des ersten Teils (10) im Verhältnis zum Rotor (3) erlauben.

7. Vorrichtung gemäß Anspruch 6, umfassend zu den Keilen (23) komplementäre Auskehlungen (30), deren Oberfläche (32) für das Zusammenwirken mit einem geneigten Teil (26) des Rotors geneigt ist.

8. Vorrichtung gemäß einem der Ansprüche 1 bis 7, umfassend Anschläge (29), die die Neigung des ersten und / oder des zweiten Teils (10, 12) begrenzen.

9. Gebläse (4) einer Turbomaschine (5), umfassend wenigstens einen Rotor (3) und Blätter mit variabler Verkeilung, **dadurch gekennzeichnet, dass** sie eine Steuervorrichtung der Verkeilung ihrer Blätter gemäß einem der Ansprüche 1 bis 8 umfasst.

10. Steuerverfahren der Verkeilung der Blätter eines Rotors (3) des Gebläses (4), die die Steuervorrichtung (1) gemäß Anspruch 1 bis 8 umsetzt, **dadurch gekennzeichnet, dass** sie die Stufe (E1) umfasst, die in der Steuerung der Zylinder (14) besteht, um die Neigung des ersten Teils (10) derart zu ändern, dass bei einer Rotation des ersten Teils (10) jedes Schaltgestänge (8) einer axialen Verschiebung unterzogen wird, deren Amplitude in Abhängigkeit von der Neigung des ersten Teils (10) variabel ist, wobei die Verkeilung des Blattes im Verlauf ihrer Rotationsumdrehung um die Achse (11) des Gebläses (4) variiert.

11. Verfahren gemäß Anspruch 10, umfassend den Schritt (E2₁), der darin besteht, eine Neigung des ersten Teils (10) einer Vorrichtung (1) eines Rotors zu erzwingen, der einem Gebläse (4) vorgeschaltet ist, das eine unterschiedliche Neigung des ersten Teils (10) einer anderen Vorrichtung (1) eines Rotors hat, der dem Gebläse (4) nachgeschaltet ist.

12. Verfahren gemäß Anspruch 11, bei dem dieser Schritt (E2₁) den Schritt (E2₂) umfasst, der darin besteht, die Neigung des ersten Teils (10) der Vorrichtung (1) des vorgeschalteten Rotors oder des nachgeschalteten Rotors um eine nominale Position zum Fluktuieren zu bringen.

13. Verfahren gemäß einem der Ansprüche 10 bis 12, umfassend den Schritt, der darin besteht, die Neigung des ersten Teils (10) der Vorrichtung (1) um eine Frequenz fluktuieren zu lassen, die höher oder niedriger ist als die Rotorgeschwindigkeit des Rotors (3).

## Claims

1. A device (1) for controlling the setting of blades of a rotor (3) of a fan (4), comprising a radial shaft (6) connected to the blade, a connecting rod (8) the axial displacement of which controls the rotation of the radial shaft (6),
**characterized in that** it comprises:
- a first part (10) rotatably movable with the rotor (3) about the axis (11) of the fan (4), and on which an end of each connecting rod (8) is secured,
- a second part (12) connected to the first part (10), and
- at least three cylinders (14) capable of moving said second part (12) in axial translation, as well as varying its tilt, the translation and tilt of the second part (12) causing corresponding translation and tilt of the first part (10),
such that, during a rotation of the first part (10), each connecting rod (8) undergoes an axial displacement the amplitude of which is variable depending on the tilt of the first part (10), enabling the setting of the blade to be varied during its rotation turn.

2. The device according to claim 1, wherein the second part (12) is connected to the first part (10) by a mechanical bearing (16).

3. The device according to one of claims 1 or 2, comprising a connecting bearing (18), connecting the cylinders (14) to the rotor (3).

4. The device according to claim 3, further comprising an elastic damper (19) connecting the cylinders (14) to a sheath (20) of the fan (4).

5. The device according to one of claims 1 to 4, wherein the first part (10) is connected to the rotor (3) by connecting elements (22) comprising a cardan joint (21).

6. The device according to claim 5, wherein the connecting elements (22) further comprise keys (23) enabling the first part (10) to be axially guided relative to the rotor (3).

7. The device according to claim 6, comprising throats (30) complementary to the keys (23), a surface (32) of which is tilted for cooperating with a tilted part (26) of the rotor.

8. The device according to one of claims 1 to 7, comprising stops (29) restricting the tilt of the first and/or the second part (10, 12).

9. A fan (4) of a turbomachine (5) comprising at least one rotor (3) and variable setting blades, **characterized in that** it comprises a device for controlling the setting of its blades according to one of claims 1 to 8.

10. A method for controlling the setting of the blades of a rotor (3) of a fan (4), implementing the controlling device (1) according to one of claims 1 to 8, **characterized in that** it comprises the step (E1) of controlling the cylinders (14) to modify the tilt of the first part (10),
such that, during a rotation of the first part (10), each connecting rod (8) undergoes an axial displacement the amplitude of which is variable depending on the tilt of the first part (10), the blade setting varying during its rotation turn about the axis (11) of the fan (4).

11. The method according to claim 10, comprising the step (E2₁) of imposing a tilt of the first part (10) of a device (1) of a rotor disposed upstream of a fan (4) which is different from the tilt of the first part (10) of another device (1) of a rotor disposed downstream of the fan (4).

12. The method according to claim 11, wherein this step (E2₁) comprises the step (E2₂) of fluctuating the tilt of the first part (10) of the device (1) of the upstream rotor or downstream rotor about a nominal position.

13. The method according to one of claims 10 to 12, comprising the step of fluctuating the tilt of the first part (10) of the device (1) at a higher or lower frequency than the rotation speed of the rotor (3).
